# EUROPEAN PATENT APPLICATION

(11) **EP 4 428 601 A2**
(43) Date of publication of application: **11.09.2024**
(21) Application number: 24155088.8
(22) Date of filing: 31.01.2024
(51) Int. Cl.: G02B 27/01, H04B 10/11, H04B 10/112

(54) **LINE-OF-SIGHT (LOS) COMMUNICATION CAPABILITY FOR A NEAR-EYE DISPLAY DEVICE**

(30) Priority: 10.03.2023 US 202318119901
(71) Applicant: Meta Platforms Technologies, LLC, Menlo Park, CA 94025 (US)
(72) Inventor: Matsimanis, Peter Andrew, Menlo Park (US); Ahmed, Nabeel, Menlo Park (US); Cendon Martin, Bruno, Menlo Park (US)
(74) Representative: Murgitroyd & Company

(57) **Abstract**

A wearable device such as an augmented reality (AR) / virtual reality (VR) near-eye display device employs wireless communication technology to facilitate "walkie-talkie" style line-of-sight (LoS) communication between two users or one user and a group of users (unidirectional or bidirectional broadcast mode). The wireless communication may be facilitated by an ultra-wide band (UWB) or comparable wireless communication sub-system. The system may detect another user(s) within range of communication and within a predefined angle-of-arrival (AoA). The communication may be initiated by the user through an input allowing the user to communicate with the other user(s) discretely through audio and/or video modes. In a "walkie talkie selfie" mode, two or more users may capture images of each other, and the images may be superimposed generating a "selfie" of the entire group.

## Description

### TECHNICAL FIELD

This patent application relates generally to near-eye display devices, and in particular, a near-eye display device with line-of-sight (LoS) communication capability.

### BACKGROUND

With recent advances in technology, prevalence and proliferation of content creation and delivery has increased greatly in recent years. In particular, interactive content such as virtual reality (VR) content, augmented reality (AR) content, mixed reality (MR) content, and content within and associated with a real and/or virtual environment (e.g., a "metaverse") has become appealing to consumers.

To facilitate delivery of this and other related content, service providers have endeavored to provide various forms of wearable display systems. One such example may be a head-mounted display (HMD) device, such as a wearable eyewear, a wearable headset, or eyeglasses. In some examples, the head-mounted display (HMD) device may project or direct light to may display virtual objects or combine images of real objects with virtual objects, as in virtual reality (VR), augmented reality (AR), or mixed reality (MR) applications. For example, in an AR system, a user may view both images of virtual objects (e.g., computer-generated images (CGIs)) and the surrounding environment.

### SUMMARY

The present invention provides systems and a method as defined in the appended claims.

In accordance with a first aspect, there is provided a line-of-sight (LoS) communication system, comprising:
a first near-eye display device and a second near-eye display device, each of the first and second near-eye display devices comprising:
an augmented reality (AR) or virtual reality (VR) display;
an image capture device;
an audio sub-system; and
a wireless communication sub-system, wherein
the wireless communication sub-system of the first near-eye display device is configured to:
   detect the second near-eye display device as within a range and an angle-of-arrival (AoA) of the first near-eye display device; and
   establish a LoS communication session with the wireless communication sub-system of the second near-eye display device.

At least one of the AR or VR display, the image capture device, or the audio sub-system of the first and second near-eye display devices may be used for the established LoS communication session.

The wireless communication sub-system may comprise an ultra-wide band (UWB) transceiver.

The wireless communication sub-system may further comprise an additional transceiver.

The UWB transceiver may be used to detect the second near-eye display device as within the range and the AoA of the first near-eye display device; and one of the UWB transceiver or the additional transceiver may be used to facilitate the LoS communication session.

One of the UWB transceiver or the additional transceiver may be selected to facilitate the LoS communication session based on at least one of an available power in the first and second near-eye display devices, a noise level of an environment, or a selected communication mode.

Upon detection of the second near-eye display device as within the range and the AoA of the first near-eye display device, a wearer of the first near-eye display device may be provided with an audio, visual, or audio-visual indication to initiate the LoS communication session.

The wireless communication sub-system of the first near-eye display device may be further configured to:
search for another near-eye display device within the range and the AoA of the first near-eye display device to establish another LoS communication session.

In accordance with a second aspect, there is provided a line-of-sight (LoS) communication system, comprising:
at least two near-eye display devices, wherein the at least two near-eye display devices are worn by users facing each other and each near-eye display device comprises:
an augmented reality (AR) or virtual reality (VR) display;
an image capture device; and
a wireless communication sub-system, wherein
each near-eye display device is configured to capture an image of a user within a field-of-view (FOV) of each near-eye display device; and
captured images are combined to generate a selfie image of the users together.

The images may be captured in response to a selfie capture command wirelessly transmitted by the wireless communication sub-system of one of the at least two near-eye display devices.

Each near-eye display device may further comprise a processor, and the captured images may be combined by at least one of the processors of the at least two near-eye display devices.

The captured images may be provided by respective near-eye display devices to a service provider; and the captured images may be combined by a processor of the service provider.

At least one of the users may be provided with a selection of a composition technique for the selfie image.

In accordance with a third aspect, there is provided a method, comprising:
detecting, by a wireless communication sub-system of a first near-eye display device, a second near-eye display device within a range and an angle-of-arrival (AoA) of the first near-eye display device;
providing an indication to a wearer of the first near-eye display device an availability of line-of-sight (LoS) communication with the second near-eye display device; and
upon selection of the LoS communication by the wearer of the first near-eye display device, establishing a LoS communication session with the second near-eye display device.

Establishing the LoS communication session with the second near-eye display device may comprise: employing at least one of an audio communication mode or a video communication mode.

The method may further comprise:
selecting a communication mode of the LoS communication session based on at least one of an available power in the first and second near-eye display devices, a noise level of an environment, a distance between the first and second near-eye display devices, or the AoA.

Providing the indication to the wearer of the first near-eye display device the availability of the LoS communication may comprise:
providing with an audio, visual, or audio-visual indication to accept the LoS communication session.

The method may further comprise:
searching for additional near-eye display devices within the range and AoA of the first near-eye display device to establish LoS communication sessions.

The method may further comprise:
establishing a plurality of LoS communication sessions simultaneously with a plurality of near-eye display devices in a unidirectional or bidirectional broadcast mode.

The wireless communication sub-system may comprise an ultra-wide band (UWB) transceiver.

It will be appreciated that any features described herein as being suitable for incorporation into one or more aspects are intended to be generalizable across any and all aspects described herein. Other aspects of the present disclosure can be understood by those skilled in the art in light of the description, the claims and the drawings. The foregoing general description and the following detailed description are exemplary and explanatory only and are not restrictive of the claims.

### BRIEF DESCRIPTION OF DRAWINGS

Features of the present disclosure are illustrated by way of example and not limited in the following figures, in which like numerals indicate like elements. One skilled in the art will readily recognize from the following that alternative examples of the structures and methods illustrated in the figures can be employed within the scope of the appended claims.
Figure 1 illustrates a block diagram of an artificial reality system environment including a near-eye display device, according to an example.
Figures 2A through 2C illustrate various views of a near-eye display device in the form of a head-mounted display (HMD) device, according to an example.
Figures 3A and 3B illustrate a perspective view and a top view of a near-eye display device in the form of a pair of glasses, according to an example.
Figure 4 illustrates line-of-sight (LoS) communication between two users wearing near-eye display devices, according to examples.
Figure 5A illustrates a unidirectional (broadcast) type line-of-sight (LoS) communication between a user and a group of users, according to examples.
Figure 5B illustrates a bidirectional line-of-sight (LoS) communication between a user and a group of users, according to examples.
Figure 5C illustrates generation of a composite image capture from multiple image captures by near-eye display devices coordinated through line-of-sight (LoS) communication, according to examples.
Figure 6 illustrates a flow diagram for a method of facilitating line-of-sight (LoS) communication through near-eye display devices, according to some examples.

### DETAILED DESCRIPTION

For simplicity and illustrative purposes, the present application is described by referring mainly to examples thereof. In the following description, numerous specific details are set forth in order to provide a thorough understanding of the present application. It will be readily apparent, however, that the present application may be practiced without limitation to these specific details. In other instances, some methods and structures readily understood by one of ordinary skill in the art have not been described in detail so as not to unnecessarily obscure the present application. As used herein, the terms "a" and "an" are intended to denote at least one of a particular element, the term "includes" means includes but not limited to, the term "including" means including but not limited to, and the term "based on" means based at least in part on.

As used herein, "line-of-sight (LoS) communication" refers to a unidirectional or bidirectional wireless communication in audio and/or video modes between two users who are within sight of each other. A "range" refers to a distance between two line-of-sight (LoS) communication capable near-eye display devices at which wireless communication can still be facilitated. An "angle of arrival" refers to an angle that defines a cone with a tip at a line-of-sight (LoS) communication capable near-eye display device, where the device can wirelessly communicate with another line-of-sight (LoS) communication capable near-eye display device within the cone.

Augmented reality (AR) / virtual reality (VR) near-eye display devices, also referred to as smart glasses, may also provide the capability to communicate with other devices. For example, a user may participate in a video call or have a two-way audio / video communication with another user. However, those communications are commonly facilitated through a network assocaited with a near-eye display device, over which the device may also receive data and instructions and send data out. Such communications involve wired and wireless networks, and are not directional.

In some examples of the present disclosure, a wearable device such as an augmented reality (AR) / virtual reality (VR) near-eye display device may employ wireless communication technology to facilitate "walkie-talkie" style line-of-sight (LoS) communication between two users or one user and a group of users (broadcast mode). The wireless communication may be facilitated by an ultra-wide band (UWB) wireless communication sub-system. The system may detect another user(s) within range of communication and within a predefined angle-of-arrival (AoA). The communication may be initiated by the user through an input allowing the user to communicate with the other user(s) discretely through audio and/or video modes. As mentioned herein, the line-of-sight (LoS) communication may be between two users or between a user and a group of other users (unidirectional or bidirectional). In some examples, a user may capture an image of a group of users, and one of the users in the group may capture an image of the user. The images may then be superimposed generating a "selfie" of the group including the separate user.

While some advantages and benefits of the present disclosure are apparent, other advantages and benefits may include providing secure and discrete communication capability through a near-eye display device and reduction of power consumption through selection of different communication modes.

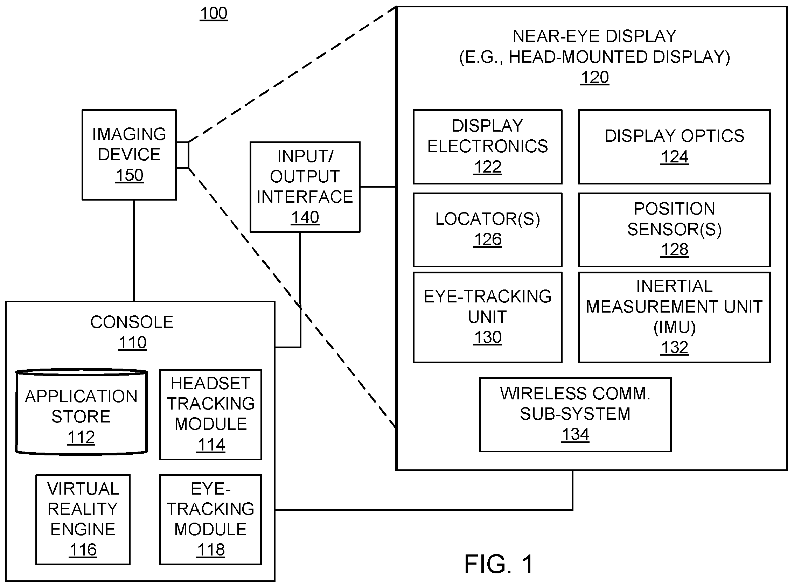

Figure 1 illustrates a block diagram of an artificial reality system environment 100 including a near-eye display device, according to an example. As used herein, a "near-eye display device" may refer to a device (e.g., an optical device) that may be in close proximity to a user's eye. As used herein, "artificial reality" may refer to aspects of, among other things, a "metaverse" or an environment of real and virtual elements and may include use of technologies associated with virtual reality (VR), augmented reality (AR), and/or mixed reality (MR). As used herein a "user" may refer to a user or wearer of a "near-eye display device."

As shown in Figure 1, the artificial reality system environment 100 may include a near-eye display device 120, an optional external imaging device 150, and an optional input/output interface 140, each of which may be coupled to a console 110. The console 110 may be optional in some instances as the functions of the console 110 may be integrated into the near-eye display device 120. In some examples, the near-eye display device 120 may be a head-mounted display (HMD) that presents content to a user.

In some instances, for a near-eye display system, it may generally be desirable to expand an eye box, reduce display haze, improve image quality (e.g., resolution and contrast), reduce physical size, increase power efficiency, and increase or expand field of view (FOV). As used herein, "field of view" (FOV) may refer to an angular range of an image as seen by a user, which is typically measured in degrees as observed by one eye (for a monocular head-mounted display (HMD)) or both eyes (for binocular head-mounted displays (HMDs)). Also, as used herein, an "eye box" may be a two-dimensional box that may be positioned in front of the user's eye from which a displayed image from an image source may be viewed.

In some examples, in a near-eye display system, light from a surrounding environment may traverse a "see-through" region of a waveguide display (e.g., a transparent substrate) to reach a user's eyes. For example, in a near-eye display system, light of projected images may be coupled into a transparent substrate of a waveguide, propagate within the waveguide, and be coupled or directed out of the waveguide at one or more locations to replicate exit pupils and expand the eye box.

In some examples, the near-eye display device 120 may include one or more rigid bodies, which may be rigidly or non-rigidly coupled to each other. In some examples, a rigid coupling between rigid bodies may cause the coupled rigid bodies to act as a single rigid entity, while in other examples, a non-rigid coupling between rigid bodies may allow the rigid bodies to move relative to each other.

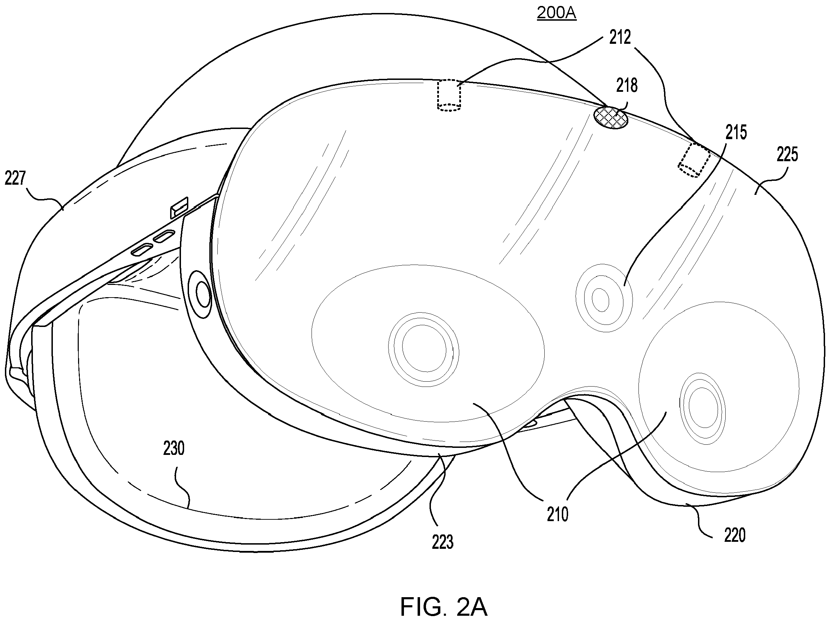

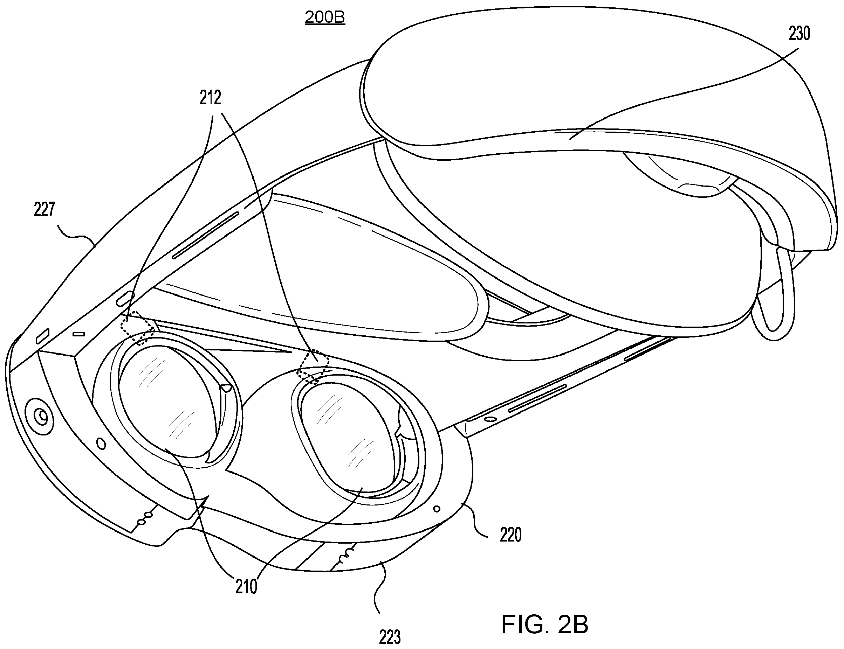

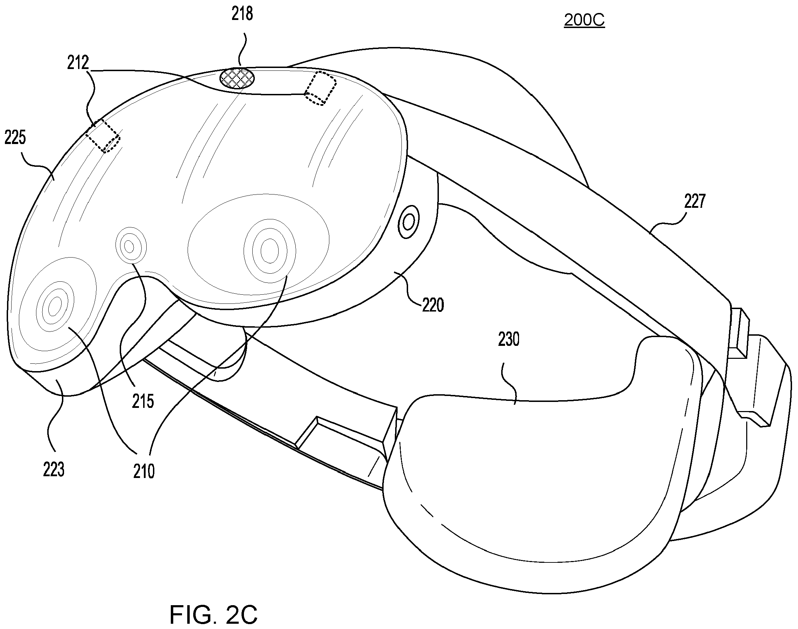

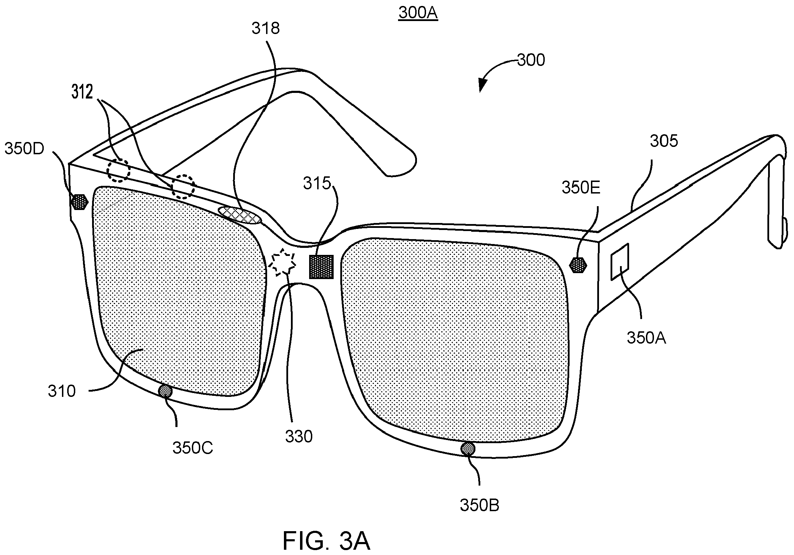

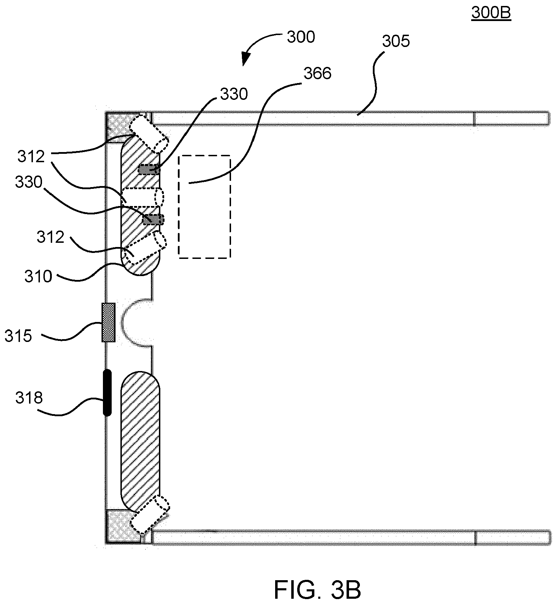

In some examples, the near-eye display device 120 may be implemented in any suitable form-factor, including a head-mounted display (HMD), a pair of glasses, or other similar wearable eyewear or device. Examples of the near-eye display device 120 are further described below with respect to Figures 2 and 3. Additionally, in some examples, the functionality described herein may be used in a head-mounted display (HMD) or headset that may combine images of an environment external to the near-eye display device 120 and artificial reality content (e.g., computer-generated images). Therefore, in some examples, the near-eye display device 120 may augment images of a physical, real-world environment external to the near-eye display device 120 with generated and/or overlaid digital content (e.g., images, video, sound, etc.) to present an augmented reality to a user.

In some examples, the near-eye display device 120 may include any number of display electronics 122, display optics 124, and an eye tracking unit 130. In some examples, the near-eye display device 120 may also include one or more locators 126, one or more position sensors 128, an inertial measurement unit (IMU) 132, and a wireless communication subs-system 134. In some examples, the near-eye display device 120 may omit any of the eye tracking unit 130, the one or more locators 126, the one or more position sensors 128, and the inertial measurement unit (IMU) 132, or may include additional elements.

In some examples, the display electronics 122 may display or facilitate the display of images to the user according to data received from, for example, the optional console 110. In some examples, the display electronics 122 may include one or more display panels. In some examples, the display electronics 122 may include any number of pixels to emit light of a predominant color such as red, green, blue, white, or yellow. In some examples, the display electronics 122 may display a three-dimensional (3D) image, e.g., using stereoscopic effects produced by two-dimensional panels, to create a subjective perception of image depth.

In some examples, the near-eye display device 120 may include a projector (not shown), which may form an image in angular domain for direct observation by a viewer's eye through a pupil. The projector may employ a controllable light source (e.g., a laser source) and a micro-electromechanical system (MEMS) beam scanner to create a light field from, for example, a collimated light beam. In some examples, the same projector or a different projector may be used to project a fringe pattern on the eye, which may be captured by a camera and analyzed (e.g., by the eye tracking unit 130) to determine a position of the eye (the pupil), a gaze, etc.

In some examples, the display optics 124 may display image content optically (e.g., using optical waveguides and/or couplers) or magnify image light received from the display electronics 122, correct optical errors associated with the image light, and/or present the corrected image light to a user of the near-eye display device 120. In some examples, the display optics 124 may include a single optical element or any number of combinations of various optical elements as well as mechanical couplings to maintain relative spacing and orientation of the optical elements in the combination. In some examples, one or more optical elements in the display optics 124 may have an optical coating, such as an anti-reflective coating, a reflective coating, a filtering coating, and/or a combination of different optical coatings.

In some examples, the display optics 124 may also be designed to correct one or more types of optical errors, such as two-dimensional optical errors, three-dimensional optical errors, or any combination thereof. Examples of two-dimensional errors may include barrel distortion, pincushion distortion, longitudinal chromatic aberration, and/or transverse chromatic aberration. Examples of three-dimensional errors may include spherical aberration, chromatic aberration field curvature, and astigmatism.

In some examples, the one or more locators 126 may be objects located in specific positions relative to one another and relative to a reference point on the near-eye display device 120. In some examples, the optional console 110 may identify the one or more locators 126 in images captured by the optional external imaging device 150 to determine the artificial reality headset's position, orientation, or both. The one or more locators 126 may each be a light-emitting diode (LED), a corner cube reflector, a reflective marker, a type of light source that contrasts with an environment in which the near-eye display device 120 operates, or any combination thereof.

In some examples, the external imaging device 150 may include one or more cameras, one or more video cameras, any other device capable of capturing images including the one or more locators 126, or any combination thereof. The optional external imaging device 150 may be configured to detect light emitted or reflected from the one or more locators 126 in a field of view of the optional external imaging device 150.

In some examples, the one or more position sensors 128 may generate one or more measurement signals in response to motion of the near-eye display device 120. Examples of the one or more position sensors 128 may include any number of accelerometers, gyroscopes, magnetometers, and/or other motion-detecting or error-correcting sensors, or any combination thereof.

In some examples, the inertial measurement unit (IMU) 132 may be an electronic device that generates fast calibration data based on measurement signals received from the one or more position sensors 128. The one or more position sensors 128 may be located external to the inertial measurement unit (IMU) 132, internal to the inertial measurement unit (IMU) 132, or any combination thereof. Based on the one or more measurement signals from the one or more position sensors 128, the inertial measurement unit (IMU) 132 may generate fast calibration data indicating an estimated position of the near-eye display device 120 that may be relative to an initial position of the near-eye display device 120. For example, the inertial measurement unit (IMU) 132 may integrate measurement signals received from accelerometers over time to estimate a velocity vector and integrate the velocity vector over time to determine an estimated position of a reference point on the near-eye display device 120. Alternatively, the inertial measurement unit (IMU) 132 may provide the sampled measurement signals to the optional console 110, which may determine the fast calibration data.

The eye tracking unit 130 may include one or more eye tracking systems. As used herein, "eye tracking" may refer to determining an eye's position or relative position, including orientation, location, and/or gaze of a user's eye. In some examples, an eye tracking system may include an imaging system that captures one or more images of an eye and may optionally include a light emitter, which may generate light (e.g., a fringe pattern) that is directed to an eye such that light reflected by the eye may be captured by the imaging system (e.g., a camera). In other examples, the eye tracking unit 130 may capture reflected radio waves emitted by a miniature radar unit. These data associated with the eye may be used to determine or predict eye position, orientation, movement, location, and/or gaze.

In some examples, the wireless communication sub-system 134 may include an ultra-wide band (UWB) transceiver. Ultra-wide band (UWB) wireless communication technology is used for short-range, fast, and secure data transmission environments. Ultra-wide band (UWB) wireless communication technology provides high transmission speed, low power consumption, and large bandwidth, in addition to the ability to co-exist with other wireless transmission technologies. The ultra-wide band (UWB) transceiver may be used to detect another user (head-mounted display (HMD) device) within range of communication and within an angle-of-arrival (AoA), then establish line-of-sight (LoS) communication between the two users. The communication may be in audio mode only or in audio/video mode. In other examples, the ultra-wide band (UWB) transceiver may be used to detect the other user, but a different communication technology (transceiver) such as WiFi or Bluetooth Low Energy (BLE) may be used to facilitate the line-of-sight (LoS) communication. In some cases, multiple wireless communication transceivers may be available and one with lowest power consumption, highest communication quality (e.g., based on interfering signals), or user choice may be used. For example, the communication technology may be selected based on a lowest power consumption for a given range.

In some examples, the input/output interface 140 may be a device that allows a user to send action requests to the optional console 110. As used herein, an "action request" may be a request to perform a particular action. For example, an action request may be to start or to end an application or to perform a particular action within the application. The input/output interface 140 may include one or more input devices. Example input devices may include a keyboard, a mouse, a game controller, a glove, a button, a touch screen, or any other suitable device for receiving action requests and communicating the received action requests to the optional console 110. In some examples, an action request received by the input/output interface 140 may be communicated to the optional console 110, which may perform an action corresponding to the requested action.

In some examples, the optional console 110 may provide content to the near-eye display device 120 for presentation to the user in accordance with information received from one or more of external imaging device 150, the near-eye display device 120, and the input/output interface 140. For example, in the example shown in Figure 1, the optional console 110 may include an application store 112, a headset tracking module 114, a virtual reality engine 116, and an eye tracking module 118. Some examples of the optional console 110 may include different or additional modules than those described in conjunction with Figure 1. Functions further described below may be distributed among components of the optional console 110 in a different manner than is described here.

In some examples, the optional console 110 may include a processor and a non-transitory computer-readable storage medium storing instructions executable by the processor. The processor may include multiple processing units executing instructions in parallel. The non-transitory computer-readable storage medium may be any memory, such as a hard disk drive, a removable memory, or a solid-state drive (e.g., flash memory or dynamic random access memory (DRAM)). In some examples, the modules of the optional console 110 described in conjunction with Figure 1 may be encoded as instructions in the non-transitory computer-readable storage medium that, when executed by the processor, cause the processor to perform the functions further described below. It should be appreciated that the optional console 110 may or may not be needed or the optional console 110 may be integrated with or separate from the near-eye display device 120.

In some examples, the application store 112 may store one or more applications for execution by the optional console 110. An application may include a group of instructions that, when executed by a processor, generates content for presentation to the user. Examples of the applications may include gaming applications, conferencing applications, video playback application, or other suitable applications.

In some examples, the virtual reality engine 116 may execute applications within the artificial reality system environment 100 and receive position information of the near-eye display device 120, acceleration information of the near-eye display device 120, velocity information of the near-eye display device 120, predicted future positions of the near-eye display device 120, or any combination thereof from the headset tracking module 114. In some examples, the virtual reality engine 116 may also receive estimated eye position and orientation information from the eye tracking module 118. Based on the received information, the virtual reality engine 116 may determine content to provide to the near-eye display device 120 for presentation to the user.

In some examples, the eye tracking module 118, which may be implemented as a processor, may receive eye tracking data from the eye tracking unit 130 and determine the position of the user's eye based on the eye tracking data. In some examples, the position of the eye may include an eye's orientation, location, or both relative to the near-eye display device 120 or any element thereof. So, in these examples, because the eye's axes of rotation change as a function of the eye's location in its socket, determining the eye's location in its socket may allow the eye tracking module 118 to more accurately determine the eye's orientation.

In some examples, a location of a projector of a display system may be adjusted to enable any number of design modifications. For example, in some instances, a projector may be located in front of a viewer's eye (i.e., "front-mounted" placement). In a front-mounted placement, in some examples, a projector of a display system may be located away from a user's eyes (i.e., "world-side"). In some examples, a head-mounted display (HMD) device may utilize a front-mounted placement to propagate light towards a user's eye(s) to project an image.

Figures 2A through 2C illustrate various views of a near-eye display device in the form of a head-mounted display (HMD) device 200, according to an example. In some examples, the head-mounted device (HMD) device 200 may be a part of a virtual reality (VR) system, an augmented reality (AR) system, a mixed reality (MR) system, another system that uses displays or wearables, or any combination thereof. In some examples, the head-mounted display (HMD) device 200 may include a body 220 and a head strap 230. Figure 2 shows a bottom side 223, a front side 225, and a left side 227 of the body 220 in the perspective view. In some examples, the head strap 230 may have an adjustable or extendible length. In particular, in some examples, there may be a sufficient space between the body 220 and the head strap 230 of the head-mounted display (HMD) device 200 for allowing a user to mount the head-mounted display (HMD) device 200 onto the user's head. For example, the length of the head strap 230 may be adjustable to accommodate a range of user head sizes. In some examples, the head-mounted display (HMD) device 200 may include additional, fewer, and/or different components.

In some examples, the head-mounted display (HMD) device 200 may present, to a user, media or other digital content including virtual and/or augmented views of a physical, real-world environment with computer-generated elements. Examples of the media or digital content presented by the head-mounted display (HMD) device 200 may include images (e.g., two-dimensional (2D) or three-dimensional (3D) images), videos (e.g., 2D or 3D videos), audio, or any combination thereof. In some examples, the images and videos may be presented to each eye of a user by one or more display assemblies (not shown in Figure 2) enclosed in the body 220 of the head-mounted display (HMD) device 200.

In some examples, the head-mounted display (HMD) device 200 may include various sensors (not shown), such as depth sensors, motion sensors, position sensors, and/or eye tracking sensors. Some of these sensors may use any number of structured or unstructured light patterns for sensing purposes. In some examples, the head-mounted display (HMD) device 200 may include an input/output interface 140 for communicating with a console 110, as described with respect to Figure 1. In some examples, the head-mounted display (HMD) device 200 may include a virtual reality engine (not shown), but similar to the virtual reality engine 116 described with respect to Figure 1, that may execute applications within the head-mounted display (HMD) device 200 and receive depth information, position information, acceleration information, velocity information, predicted future positions, or any combination thereof of the head-mounted display (HMD) device 200 from the various sensors.

In some examples, the information received by the virtual reality engine 116 may be used for producing a signal (e.g., display instructions) to the one or more display assemblies. In some examples, the head-mounted display (HMD) device 200 may include locators (not shown), but similar to the locators 126 described in Figure 1, which may be located in fixed positions on the body 220 of the head-mounted display (HMD) device 200 relative to one another and relative to a reference point. Each of the locators may emit light that is detectable by an external imaging device. This may be useful for the purposes of head tracking or other movement/orientation. It should be appreciated that other elements or components may also be used in addition or in lieu of such locators.

It should be appreciated that in some examples, a projector mounted in a display system may be placed near and/or closer to a user's eye (i.e., "eye-side"). In some examples, and as discussed herein, a projector for a display system shaped liked eyeglasses may be mounted or positioned in a temple arm (i.e., a top far corner of a lens side) of the eyeglasses. It should be appreciated that, in some instances, utilizing a back-mounted projector placement may help to reduce size or bulkiness of any required housing required for a display system, which may also result in a significant improvement in user experience for a user.

In some examples, the line-of-sight (LoS) transceiver 218 may be part of a wireless communication sub-system such as the wireless communication sub-system 134 in Figure 1 and may be ultra-wide band (UWB) transceiver. The line-of-sight (LoS) transceiver 218 may be used to detect another user (head-mounted display (HMD) device) within range of communication and within an angle-of-arrival (AoA), then establish line-of-sight (LoS) communication between the two users. The communication may be in audio mode only or in audio/video mode. In other examples, the line-of-sight (LoS) transceiver 218 may be used to detect the other user, but a different (transceiver) such as WiFi or Bluetooth Low Energy (BLE) may be used to facilitate the line-of-sight (LoS) communication. In some cases, multiple wireless communication transceivers may be available and one with lowest power consumption, highest communication quality (e.g., based on interfering signals), or user choice may be used.

Figure 3A is a perspective view 300A of a near-eye display device 300 in the form of a pair of glasses (or other similar eyewear), according to an example. In some examples, the near-eye display device 300 may be a specific example of near-eye display device 120 of Figure 1 and may be configured to operate as a virtual reality display, an augmented reality (AR) display, and/or a mixed reality (MR) display.

In some examples, the near-eye display device 300 may include a frame 305 and a display 310. In some examples, the display 310 may be configured to present media or other content to a user. In some examples, the display 310 may include display electronics and/or display optics, similar to components described with respect to Figures 1-2. For example, as described above with respect to the near-eye display device 120 of Figure 1, the display 310 may include a liquid crystal display (LCD) display panel, a light-emitting diode (LED) display panel, or an optical display panel (e.g., a waveguide display assembly). In some examples, the display 310 may also include any number of optical components, such as waveguides, gratings, lenses, mirrors, etc. In other examples, the display 310 may include a projector, or in place of the display 310 the near-eye display device 300 may include a projector.

In some examples, the near-eye display device 300 may further include various sensors 350a, 350b, 350c, 350d, and 350e on or within a frame 305. In some examples, the various sensors 350a-350e may include any number of depth sensors, motion sensors, position sensors, inertial sensors, and/or ambient light sensors, as shown. In some examples, the various sensors 350a-350e may include any number of image sensors configured to generate image data representing different fields of views in one or more different directions. In some examples, the various sensors 350a-350e may be used as input devices to control or influence the displayed content of the near-eye display device, and/or to provide an interactive virtual reality (VR), augmented reality (AR), and/or mixed reality (MR) experience to a user of the near-eye display device 300. In some examples, the various sensors 350a-350e may also be used for stereoscopic imaging or other similar application.

In some examples, the near-eye display device 300 may further include one or more illuminators 330 to project light into a physical environment. The projected light may be associated with different frequency bands (e.g., visible light, infra-red light, ultra-violet light, etc.), and may serve various purposes. In some examples, the one or more illuminator(s) 330 may be used as locators, such as the one or more locators 126 described above with respect to Figures 1-2.

In some examples, the near-eye display device 300 may also include a camera 315 or other image capture unit. The camera 315, for instance, may capture images of the physical environment in the field of view. In some instances, the captured images may be processed, for example, by a virtual reality engine (e.g., the virtual reality engine 116 of Figure 1) to add virtual objects to the captured images or modify physical objects in the captured images, and the processed images may be displayed to the user by the display 310 for augmented reality (AR) and/or mixed reality (MR) applications. The near-eye display device 300 may also include eye tracking sensors 312.

In some examples, the line-of-sight (LoS) transceiver 318 may be an ultra-wide band (UWB) transceiver. The line-of-sight (LoS) transceiver 318 may be used to detect another user (head-mounted display (HMD) device) within range of communication and within an angle-of-arrival (AoA), then establish line-of-sight (LoS) communication between the two users. The communication may be in audio mode only or in audio/video mode. In other examples, the line-of-sight (LoS) transceiver 318 may be used to detect the other user, but a different (transceiver) such as WiFi or Bluetooth Low Energy (BLE) may be used to facilitate the line-of-sight (LoS) communication. In some cases, multiple wireless communication transceivers may be available and one with lowest power consumption, highest communication quality (e.g., based on interfering signals), or user choice may be used.

Figure 3B is a top view 300B of a near-eye display device 300 in the form of a pair of glasses (or other similar eyewear), according to an example. In some examples, the near-eye display device 300 may include a frame 305 having a form factor of a pair of eyeglasses. The frame 305 supports, for each eye: a fringe projector 314 such as any fringe projector variant considered herein, a display 310 to present content to an eye box 366, eye tracking sensors 312, and one or more illuminators 330. The illuminators 330 may be used for illuminating an eye box 366, as well as, for providing glint illumination to the eye. A fringe projector 314 may provide a periodic fringe pattern onto a user's eye. The display 310 may include a pupil-replicating waveguide to receive the fan of light beams and provide multiple laterally offset parallel copies of each beam of the fan of light beams, thereby extending a projected image over the eye box 366.

In some examples, the pupil-replicating waveguide may be transparent or translucent to enable the user to view the outside world together with the images projected into each eye and superimposed with the outside world view. The images projected into each eye may include objects disposed with a simulated parallax, so as to appear immersed into the real-world view.

In some examples, the image processing and eye position/orientation determination functions may be performed by a central controller, not shown, of the near-eye display device 300. The central controller may also provide control signals to the display 310 to generate the images to be displayed to the user, depending on the determined eye positions, eye orientations, gaze directions, eyes vergence, etc.

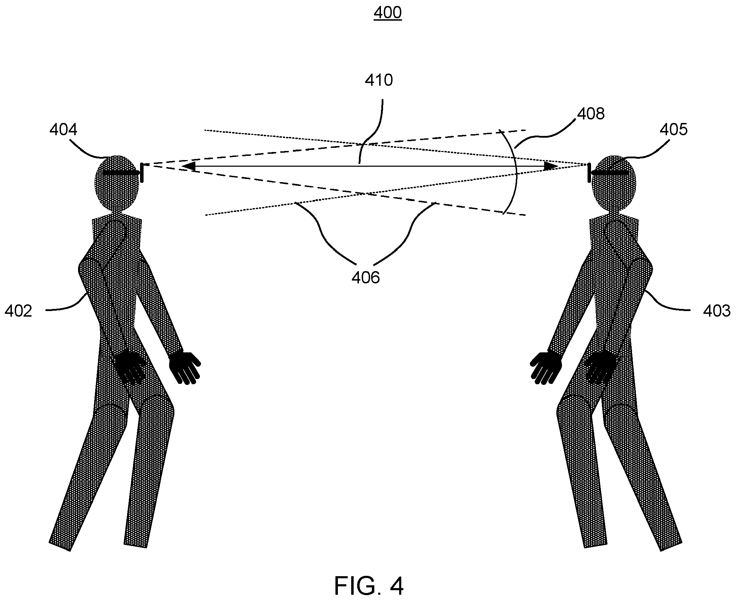

Figure 4 illustrates line-of-sight (LoS) communication between two users wearing near-eye display devices, according to examples. Diagram 400 shows a user 402 wearing a near-eye display device 404 (e.g., a head-mounted display (HMD) device). Similarly, user 403 is wearing a near-eye display device 404 (e.g., a head-mounted display (HMD) device). The users 402 and 403 are within sight of each other within a range 410 and an angle-of-arrival (AoA) 408, which are used to facilitate line-of-sight (LoS) communications 406 between the two users.

In some examples, the near-eye display device 404 and 405 may be equipped with line-of-sight (LoS) communication transceivers, which may allow the users 402 and 403 (wearers of the near-eye display devices 404 and 405) to establish discrete and low power consuming "walkie talkie" style communications when the users are within range and within an angle-of-arrival (AoA) of each other. For example, the angle-of-arrival (AoA) may be in a range from about 10 degrees to about 30 degrees (or more) letting the users communicate when they face each other. A line-of-sight (LoS) application executed on the near-eye display devices may be arranged to alert the users when line-of-sight (LoS) communication can be established. Thus, instead of going through a number of steps and establishing communication through an online communication application (and communicating over one or more networks such as the Internet), which may be cumbersome and power consuming, a user may simply accept or trigger the line-of-sight (LoS) communication when the other user is in range and within the angle-of-arrival (AoA).

The line-of-sight (LoS) communication session(s) may be facilitated by (typically short-range) personal area communication systems such as ultra-wide band (UWB) communication, Bluetooth Low Energy (BLE) communication or similar ones. Thus, power consumption of the near-eye display device may be substantially reduced. Furthermore, two users in a crowded environment (e.g., a conference center) may communicate discretely. The communication modes (i.e., audio, audio/video) may be selected by the user(s). Moreover, a near-eye display device may be equipped with multiple wireless communication systems and a suitable one may be selected (and switched to) based on available power, a noise environment, a communication mode, or similar factors.

As mentioned herein, a line-of-sight (LoS) application may detect another user within range and angle-of-arrival (AoA) and present an option to initiate a communication session to the user (e.g., an icon, text, or other visual cue, and/or an audio alert). The user may make their selection (starting the communication session, ending the communication session, switching communication modes, etc.) through any input such as touch (a sensor on the near-eye display device), gesture, body movement, audio command, eye movement, etc.).

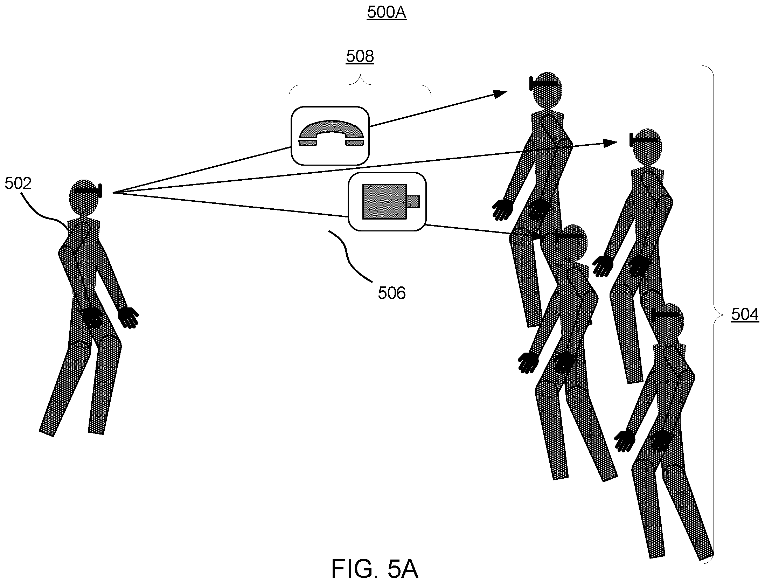

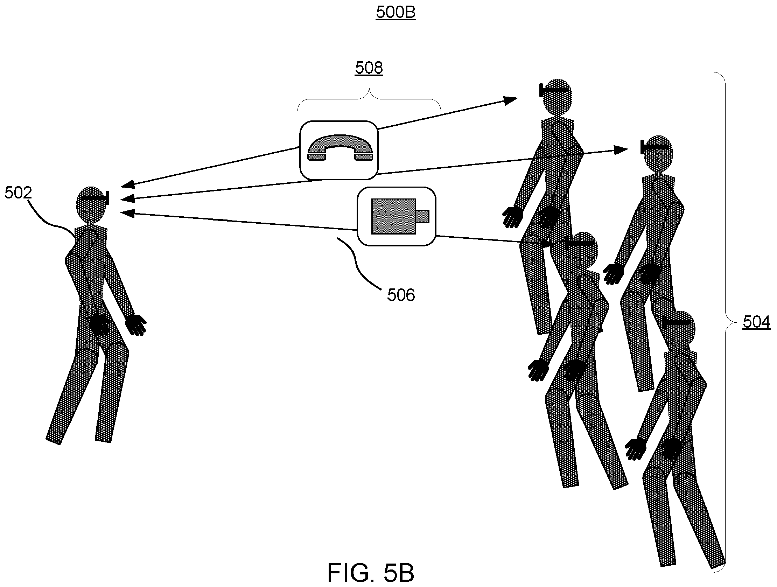

Figure 5A illustrates a unidirectional (broadcast) type line-of-sight (LoS) communication between a user and a group of users, according to examples. Figure 5B illustrates a bidirectional line-of-sight (LoS) communication between a user and a group of users, according to examples. Diagram 500A shows a user 502 communicating over audio and/or video communication modes 508 with a group of other users 504 using line-of-sight (LoS) communications 506 in a broadcast mode (unidirectional). Diagram 500B shows a similar arrangement, where the user 502 and the group of other users 504 communicate bidirectionally.

In some examples, a broadcast type unidirectional communication may be suitable to a situation as shown in the diagram 500A. For example, multiple tour guides may need to communicate with their respective tour groups in a vicinity of each other (e.g., a historic site). If the tour guides try to talk to their groups without technical equipment, they may have to adjust their voices, which some group members may not hear, or move away from each other, which may not be possible or practical in case of limited space. Using the broadcast type unidirectional feature of line-of-sight (LoS) communications through near-eye display devices, each tour guide may address their respective group without interfering with another or interference from another tour guide. Furthermore, augmented reality features may enhance the tour guide's communication. The user 502 (e.g., tour guide) may select the communication mode depending on the environment.

In some examples, bidirectional communication may be facilitated between the user 502 and the group of other users 504 as shown in the diagram 500B. Further expanding on the example scenario of Figure 5A, the tour guide(s) may select bidirectional communication to allow their tour group members to ask questions and respond to those. The broadcast mode (unidirectional or bidirectional) may be changed during the same communication session. For example, before the tour begins, the tour guide may give instructions to the tour group in unidirectional mode, then switch to bidirectional mode to allow the members to ask questions or to comment.

Another implementation scenario may be a teaching environment (a classroom or a conference), where due to number of attendees or limited space availability, multiple groups may share the same space. For example, three presenters may share the same stage, but present to three different groups (respectively). Unidirectional or bidirectional, each group's communication (presentation) may not interfere with that of another group allowing three completely separate and simultaneous presentations in the same space.

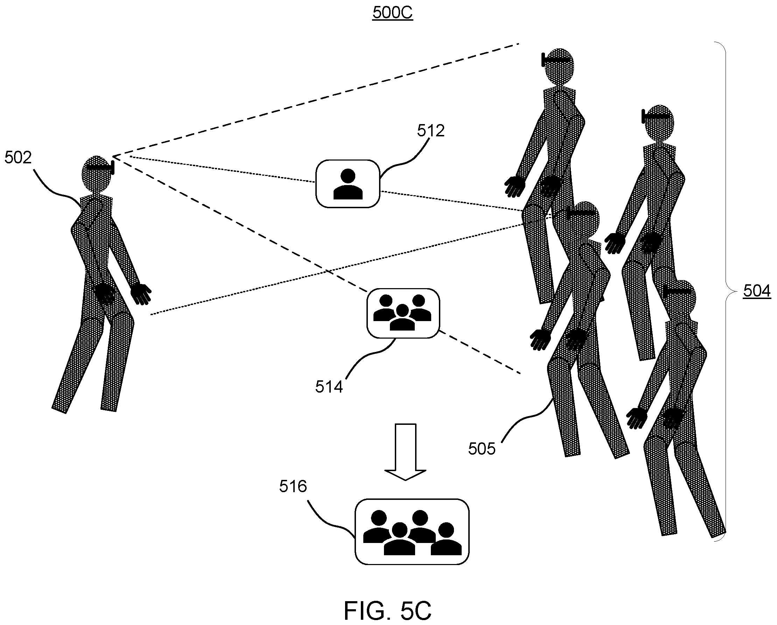

Figure 5C illustrates generation of a composite image capture from multiple image captures by near-eye display devices coordinated through line-of-sight (LoS) communication, according to examples. Diagram 500C shows a user 502 capturing (512) an image of a group of users 504 through his/her near-eye display device. Triggered by a "walkie talkie selfie" command, the user's near-eye display device, one of the users (user 505) in the group may also capture (514) an image of the user 502 through their near-eye display device. The captured images may then be processed and combined to generate a composite captured image 516 that looks like a selfie image as taken of the entire group (group of users 504 and user 502) together.

Selfie images are typically captured by handheld cameras. While a near-eye display device may include an outward facing camera, a user may not use their near-eye display device to take a selfie of themselves. In some examples, near-eye display devices may be used to capture selfie images of a group (as little as two people) through a selfie capture command (a "walkie talkie selfie" command). One of the members of the group may face the group (or the other person) and capture their image. At the same time, one of the group (or the other person) may capture an image of the person using their near-eye display device. The two captured images may then be combined at a service provider, or one or more processors in one of the near-eye display devices, for example, through stitching or other combination, to generate an image that looks like the image was taken when the entire group was together (a selfie image of the entire group).

In some examples, the "walkie talkie selfie" technique described herein may be expanded to multiple users at different positions (as long as they are facing each other). For example, each person may capture an image of another person (or multiple people). The captured images may then be combined to generate an image, where all the people are shown together. The generation of the combined image may be achieved through various techniques. The people in the image may be positioned next to each other or in other positions. A user may be able to select which generation technique (or picture composition) is to be used.

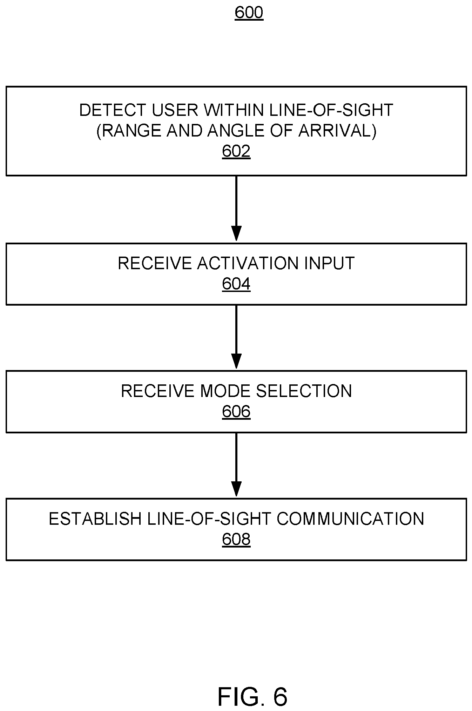

Figure 6 illustrates a flow diagram for a method 600 of facilitating line-of-sight (LoS) communication through near-eye display devices, according to some examples. The method 600 is provided by way of example, as there may be a variety of ways to carry out the method described herein. Although the method 600 is primarily described as being performed by the components of Figures 2-3B, the method 600 may be executed or otherwise performed by one or more processing components of another system or a combination of systems. Each block shown in Figure 6 may further represent one or more processes, methods, or subroutines, and one or more of the blocks may include machine readable instructions stored on a non-transitory computer readable medium and executed by a processor or other type of processing circuit to perform one or more operations described herein.

At block 602, a wireless communication sub-system in a near-eye display device may detect another line-of-sight (LoS) capable near-eye display device within range and angle-of-arrival (AoA) of communication. To reduce power consumption, the wireless communication range may be limited to personal area communication ranges, for example. The angle-of arrival (AoA) may be in a range to allow discrete and face-to-face communication between the users (e.g., up to 30 degrees or more).

At block 604, the user may provide an input through touch, gesture, eye movement, body movement, or comparable techniques to activate the line-of-sight (LoS) communication. In some examples, the user may activate the line-of-sight (LoS) application to search for a specific user or any user within a field-of-view (FOV) (a range and angle-of-arrival (AoA)) of the near-eye display device of the user. The line-of-sight (LoS) application may search and establish a communication session upon detecting the specific user or any user within range and angle-of-arrival (AoA).

At block 606, the user may select a communication mode such as audio, audio/video, or just video (e.g., for sign language or lip reading). In some examples, the mode selection may made automatically or suggested by the line-of-sight (LoS) application based on available power in the near-eye display device(s), a noise environment, a distance between the users, etc.

At block 608, the line-of-sight (LoS) applications on each near-eye display device (or a controller at a service provider) may facilitate the line-of-sight (LoS) communication. A mode of communication may be changed during the communication session. The session may be terminated upon input from one of the users or upon expiration of a timer (e.g., maximum allowed duration for communication or a prolonged quiet period).

According to examples, a method of making a near-eye display device with line-of-sight (LoS) communication is described herein. A system of making the near-eye display device is also described herein. A non-transitory computer-readable storage medium may have an executable stored thereon, which when executed instructs a processor to perform the methods described herein.

In the foregoing description, various examples are described, including devices, systems, methods, and the like. For the purposes of explanation, specific details are set forth in order to provide a thorough understanding of examples of the disclosure. However, it will be apparent that various examples may be practiced without these specific details. For example, devices, systems, structures, assemblies, methods, and other components may be shown as components in block diagram form in order not to obscure the examples in unnecessary detail. In other instances, well-known devices, processes, systems, structures, and techniques may be shown without necessary detail in order to avoid obscuring the examples.

The figures and description are not intended to be restrictive. The terms and expressions that have been employed in this disclosure are used as terms of description and not of limitation, and there is no intention in the use of such terms and expressions of excluding any equivalents of the features shown and described or portions thereof. The word "example" is used herein to mean "serving as an example, instance, or illustration." Any embodiment or design described herein as "example' is not necessarily to be construed as preferred or advantageous over other embodiments or designs.

Although the methods and systems as described herein may be directed mainly to digital content, such as videos or interactive media, it should be appreciated that the methods and systems as described herein may be used for other types of content or scenarios as well. Other applications or uses of the methods and systems as described herein may also include social networking, marketing, content-based recommendation engines, and/or other types of knowledge or data-driven systems.

## Claims

1. A line-of-sight (LoS) communication system, comprising:
a first near-eye display device and a second near-eye display device, each of the first and second near-eye display devices comprising:
an augmented reality (AR) or virtual reality (VR) display;
an image capture device;
an audio sub-system; and
a wireless communication sub-system, wherein
the wireless communication sub-system of the first near-eye display device is configured to:
detect the second near-eye display device as within a range and an angle-of-arrival (AoA) of the first near-eye display device; and
establish a LoS communication session with the wireless communication sub-system of the second near-eye display device.

2. The LoS communication system of claim 1, wherein at least one of the AR or VR display, the image capture device, or the audio sub-system of the first and second near-eye display devices are used for the established LoS communication session.

3. The LoS communication system of claim 1 or claim 2, wherein the wireless communication sub-system comprises an ultra-wide band (UWB) transceiver.

4. The LoS communication system of claim 3, wherein the wireless communication sub-system further comprises an additional transceiver;
optionally, wherein the UWB transceiver is used to detect the second near-eye display device as within the range and the AoA of the first near-eye display device; and one of the UWB transceiver or the additional transceiver is used to facilitate the LoS communication session;
optionally, wherein one of the UWB transceiver or the additional transceiver is selected to facilitate the LoS communication session based on at least one of an available power in the first and second near-eye display devices, a noise level of an environment, or a selected communication mode.

5. The LoS communication system of any preceding claim, wherein upon detection of the second near-eye display device as within the range and the AoA of the first near-eye display device, a wearer of the first near-eye display device is provided with an audio, visual, or audio-visual indication to initiate the LoS communication session.

6. The LoS communication system of any preceding claim, wherein the wireless communication sub-system of the first near-eye display device is further configured to:
search for another near-eye display device within the range and the AoA of the first near-eye display device to establish another LoS communication session.

7. A line-of-sight (LoS) communication system, comprising:
at least two near-eye display devices, wherein the at least two near-eye display devices are worn by users facing each other and each near-eye display device comprises:
an augmented reality (AR) or virtual reality (VR) display;
an image capture device; and
a wireless communication sub-system, wherein
each near-eye display device is configured to capture an image of a user within a field-of-view (FOV) of each near-eye display device; and
captured images are combined to generate a selfie image of the users together.

8. The LoS communication system of claim 7, wherein the images are captured in response to a selfie capture command wirelessly transmitted by the wireless communication sub-system of one of the at least two near-eye display devices.

9. The LoS communication system of claim 7 or claim 8, wherein
each near-eye display device further comprises a processor, and
the captured images are combined by at least one of the processors of the at least two near-eye display devices.

10. The LoS communication system of any one of claims 7 to 9, wherein
the captured images are provided by respective near-eye display devices to a service provider, and
the captured images are combined by a processor of the service provider.

11. The LoS communication system of any one of claims 7 to 10, wherein at least one of the users is provided with a selection of a composition technique for the selfie image.

12. A method, comprising:
detecting, by a wireless communication sub-system of a first near-eye display device, a second near-eye display device within a range and an angle-of-arrival (AoA) of the first near-eye display device;
providing an indication to a wearer of the first near-eye display device an availability of line-of-sight (LoS) communication with the second near-eye display device; and
upon selection of the LoS communication by the wearer of the first near-eye display device, establishing a LoS communication session with the second near-eye display device.

13. The method of claim 12, and one or more of the following:
(i) wherein establishing the LoS communication session with the second near-eye display device comprises: employing at least one of an audio communication mode or a video communication mode;
(ii) selecting a communication mode of the LoS communication session based on at least one of an available power in the first and second near-eye display devices, a noise level of an environment, a distance between the first and second near-eye display devices, or the AoA;
(iii) wherein providing the indication to the wearer of the first near-eye display device the availability of the LoS communication comprises: providing with an audio, visual, or audio-visual indication to accept the LoS communication session.

14. The method of claim 12 or claim 13, further comprising: one or more of the following:
(i) searching for additional near-eye display devices within the range and AoA of the first near-eye display device to establish LoS communication sessions;
(ii) establishing a plurality of LoS communication sessions simultaneously with a plurality of near-eye display devices in a unidirectional or bidirectional broadcast mode.

15. The method of any one of claims 12 to 14, wherein the wireless communication sub-system comprises an ultra-wide band (UWB) transceiver.
